(19) Europäisches Patentamt
European Patent Office
Office européen des brevets

(11) **EP 4 365 861 A1**

(12) **EUROPEAN PATENT APPLICATION**

(43) Date of publication:
**08.05.2024 Bulletin 2024/19**

(51) International Patent Classification (IPC):
***G07C 5/00*** *(2006.01)*      ***G06Q 50/40*** *(2024.01)*
***G08G 1/00*** *(2006.01)*

(21) Application number: **23203208.6**

(22) Date of filing: **12.10.2023**

(52) Cooperative Patent Classification (CPC):
**G06Q 10/047; G08G 1/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022 US 202263423136 P**

(71) Applicant: **GEOTAB Inc.
Oakville, ON L6H 7V2 (CA)**

(72) Inventors:
• **Liu, Chien An
  Mississauga (CA)**
• **Smith, Natalie Joy
  Oakville (CA)**

(74) Representative: **Fleuchaus & Gallo Partnerschaft
mbB
Steinerstraße 15/A
81369 München (DE)**

(54) **SYSTEMS AND METHODS FOR DETERMINING VEHICLE VOCATIONS**

(57)    Systems and methods for determining vehicle vocation are provided. The method involves operating at least one processor to: retrieve telematics data associated with a vehicle, the telematics data originating from a telematics device installed in the vehicle; process the telematics data to extract a plurality of feature datasets, the plurality of feature datasets including: a first dataset associated with distances traveled by the vehicle; a second dataset associated with stops completed by the vehicle; and a third dataset associated with round trips performed by the vehicle; apply a plurality of trained cluster models to the plurality of feature datasets to determine a plurality of vocation probabilities; and determine the vocation of the vehicle based on the plurality of vocation probabilities.

**FIG. 1**

**Description**

**CROSS-REFERENCE TO RELATED APPLICATIONS**

This application claims priority to U.S. Provisional Patent Application No. 63/423,136 filed November 7, 2022 and titled "SYSTEMS AND METHODS FOR DETERMINING VEHICLE VOCATIONS", the contents of which are incorporated herein by reference for all purposes.

**FIELD**

The embodiments described herein generally relate to vehicles and telematics data, and in particular, to determining vehicle vocations using telematics data.

**BACKGROUND**

The following is not an admission that anything discussed below is part of the prior art or part of the common general knowledge of a person skilled in the art.

Vehicles can be categorized in various ways. For example, in the United States, commercial trucks can be classified based on their gross vehicle weight rating (GVWR) as light, medium, or heavy duty. It can be useful to categorize vehicles to compare vehicles that share similar characteristics. For example, it may be useful to compare fuel consumption, idling, and speeding of vehicles that belong to the same classification. However, vehicles that share similar characteristics may be used for different purposes and may therefore exhibit different operational behaviours. For example, the same make and model of vehicle may be used for ridesharing, delivery, and personal use. It may therefore be advantageous to classify vehicles according to their operational behaviour, or vocation, rather than by inherent properties of the vehicle. However, it can be difficult to determine the vocation of a vehicle. Although telematics devices can collect large volumes of various data from vehicles, it can be challenging to know what and how the telematics data should be used to determine vocation.

**SUMMARY**

The following introduction is provided to introduce the reader to the more detailed discussion to follow. The introduction is not intended to limit or define any claimed or as yet unclaimed invention. One or more inventions may reside in any combination or subcombination of the elements or process steps disclosed in any part of this document including its claims and figures.

In accordance with a broad aspect, there is provided a method for determining a vocation of a vehicle. The method involves operating at least one processor to: retrieve telematics data associated with the vehicle, the telematics data originating from a telematics device installed in the vehicle; process the telematics data to extract a plurality of feature datasets, the plurality of feature datasets including: a first dataset associated with distances traveled by the vehicle; a second dataset associated with stops completed by the vehicle; and a third dataset associated with round trips performed by the vehicle; apply a plurality of trained cluster models to the plurality of feature datasets to determine a plurality of vocation probabilities; and determine the vocation of the vehicle based on the plurality of vocation probabilities.

In some embodiments, the plurality of trained cluster models can be applied to the plurality of feature datasets in parallel.

In some embodiments, determining the vocation of the vehicle can be based on a predetermined priority of each vocation and a predetermined probability threshold.

In some embodiments, the method can further involve operating the at least one processor to: determine a confidence score for each vocation probability based on that vocation probability and at least one incompatible vocation probability; determining the vocation of the vehicle can be based on the plurality of vocation probabilities and the confidence score for each vocation probability.

In some embodiments, the plurality of trained cluster model can include: a first trained cluster model operable to determine a probability of whether the vehicle is local, regional, or long-haul using the first data set; a second trained cluster model operable to determine a probability of whether the vehicle is door-to-door using the second data set; and a third trained cluster model operable to determine a probability of whether the vehicle is hub and spoke using the third data set.

In some embodiments, at least one trained cluster model can be a gaussian mixture model trained using an expectation-maximization algorithm.

In some embodiments, the first dataset can include at least one of: (i) a longest straight-line distance between locations visited by the vehicle, (ii) an average daily displacement of the vehicle, and/or (iii) a percentage of domicile stops at a primary domicile of the vehicle.

In some embodiments, the second dataset can include at least one of: (i) a average daily number of stops completed by the vehicle, and/or (ii) an average duration of stop completed by the vehicle.

In some embodiments, the third dataset can include at least one of: (i) a percentage of days with multiple round trips performed by the vehicle, (ii) an average daily number of round trips performed by the vehicle, and/or (iii) a percentage of distance traveled by the vehicle that were part of a round trip.

In some embodiments, determining the vocation of the vehicle can involve classifying the vehicle as one of: local, regional-haul, long-haul, door to door, and hub and spoke.

In accordance with a broad aspect, there is provided a non-transitory computer readable medium having instructions stored thereon executable by at least one processor to implement any method herein.

In accordance with a broad aspect, there is provided a system for determining a vocation of a vehicle. The system includes: at least one data store operable to store telematics data associated with the vehicle, the telematics data originating from a telematics device installed in the vehicle; at least one processor operable to: retrieve the telematics data; process the telematics data to extract a plurality of feature datasets, the plurality of feature datasets including: a first dataset associated with distances traveled by the vehicle; a second dataset associated with stops completed by the vehicle; and a third dataset associated with round trips performed by the vehicle; apply a plurality of trained cluster models to the plurality of feature datasets to determine a plurality of vocation probabilities; and determine the vocation of the vehicle based on the plurality of vocation probabilities.

In some embodiments, the plurality of trained cluster models can be applied to the plurality of feature datasets in parallel.

In some embodiments, determining the vocation of the vehicle can be based on a predetermined priority of each vocation and a predetermined probability threshold.

In some embodiments, the at least one processor can be operable to: determine a confidence score for each vocation probability based on that vocation probability and at least one incompatible vocation probability; determining the vocation of the vehicle can be based on the plurality of vocation probabilities and the confidence score for each vocation probability.

In some embodiments, the plurality of trained cluster model can include: a first trained cluster model operable to determine a probability of whether the vehicle is local, regional, or long-haul using the first data set; a second trained cluster model operable to determine a probability of whether the vehicle is door-to-door using the second data set; and a third trained cluster model operable to determine a probability of whether the vehicle is hub and spoke using the third data set.

In some embodiments, at least one trained cluster model can be a gaussian mixture model trained using an expectation-maximization algorithm.

In some embodiments, the first dataset can include at least one of: (i) a longest straight-line distance between locations visited by the vehicle, (ii) an average daily displacement of the vehicle, and/or (iii) a percentage of domicile stops at a primary domicile of the vehicle.

In some embodiments, the second dataset can include at least one of: (i) an average daily number of stops completed by the vehicle, and/or (ii) an average duration of stop completed by the vehicle.

In some embodiments, the third dataset can include at least one of: (i) a percentage of days with multiple round trips performed by the vehicle, (ii) an average daily number of round trips performed by the vehicle, and/or (iii) a percentage of distance traveled by the vehicle that were part of a round trip.

In some embodiments, determining the vocation of the vehicle can involve classifying the vehicle as one of: local, regional-haul, long-haul, door to door, and hub and spoke.

## BRIEF DESCRIPTION OF THE DRAWINGS

Several embodiments will be described in detail with reference to the drawings, in which:

FIG. 1 is a block diagram of various components interacting with an example fleet management system, in accordance with an embodiment;

FIG. 2 is a block diagram of an example fleet management system interacting with an example telematics device and example vehicle, in accordance with an embodiment;

FIG. 3 is a block diagram of an example computing device interacting with an example fleet management system, in accordance with an embodiment;

FIG. 4 is a block diagram of an example system for determining vehicle vocation, in accordance with an embodiment;

FIG. 5A is a plot of a plurality of example feature datasets associated with distances traveled by vehicles, in accordance with an embodiment;

FIG. 5B is a plot of the feature dataset shown in FIG. 5A clustered using an example trained cluster model, in accordance with an embodiment;

FIG. 6A is a plot of a plurality of example feature datasets associated with stops completed by a plurality of vehicles, in accordance with an embodiment;

FIG. 6B is a plot of the feature datasets shown in FIG. 6A clustered using an example trained cluster model, in accordance with an embodiment

FIG. 7A is a plot of a plurality of example feature datasets associated with round trips performed by a plurality of vehicles, in accordance with an embodiment;

FIG. 7B is a plot of the feature datasets shown in FIG. 7A clustered using an example trained cluster model, in accordance with an embodiment

FIG. 8 is a flowchart of an example method for determining vehicle vocations, in accordance with an embodiment;

FIG. 9 is a flowchart of another example method for determining vehicle vocations, in accordance with an embodiment; and

FIG. 10 is a flowchart of an example method for training models for determining vehicle vocations, in accordance with an embodiment.

The drawings, described below, are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

## DETAILED DESCRIPTION

Various systems or methods will be described below to provide an example of an embodiment of the claimed subject matter. No embodiment described below limits any claimed subject matter and any claimed subject matter may cover methods or systems that differ from those described below. The claimed subject matter is not limited to systems or methods having all of the features of any one system or method described below or to features common to multiple or all of the apparatuses or methods described below. It is possible that a system or method described below is not an embodiment that is recited in any claimed subject matter. Any subject matter disclosed in a system or method described below that is not claimed in this document may be the subject matter of another protective instrument, for example, a continuing patent application, and the applicants, inventors or owners do not intend to abandon, disclaim or dedicate to the public any such subject matter by its disclosure in this document.

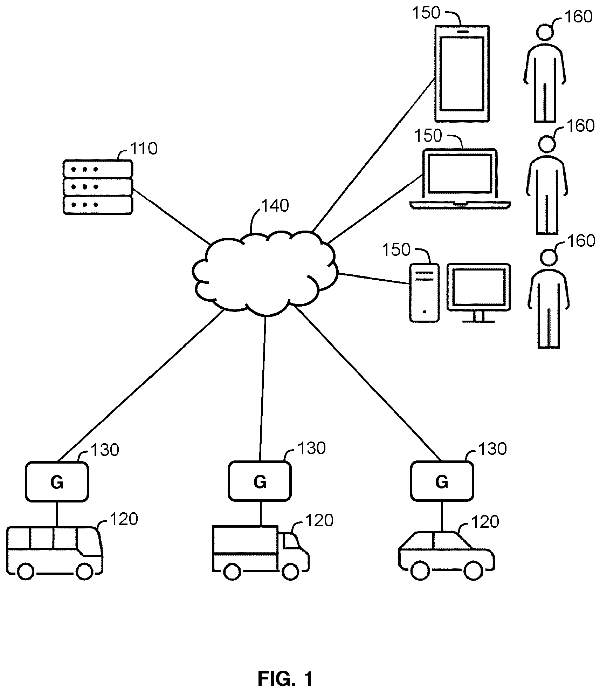

Referring to FIG. 1, there is shown an example fleet management system 110 for managing a plurality of assets equipped with a plurality of telematics devices 130. In operation, the telematics devices 130 can gather various data associated with the assets (i.e., telematics data) and share the telematics data with the fleet management system 110. The fleet management system 110 can be remotely located from the telematics devices 130 and the assets.

For ease of exposition, various examples will now be described in which the assets are vehicles 120. However, it should be appreciated that the systems and methods described herein may be used to manage other forms of assets in some embodiments. Such assets can generally include any apparatuses, articles, machines, and/or equipment that can be equipped and monitored by the telematics devices 130. For example, other assets may include shipping containers, trailers, construction equipment, generators, and the like. The nature and format of the telematics data may vary depending on the type of asset.

The vehicles 120 may include any machines for transporting goods or people. The vehicles 120 can include motor vehicles, such as, but not limited to, motorcycles, cars, trucks, and/or buses. The motor vehicles can be gas, diesel, electric, hybrid, and/or alternative fuel. In some cases, the vehicles 120 may include other kinds of vehicles, such as, but not limited to, railed vehicles (e.g., trains, trams), watercraft (e.g., ships, boats), aircraft (e.g., airplanes, helicopters), and/or spacecraft. Each vehicle 120 can be equipped with a telematics device 130. Although only three vehicles 120 having three telematics devices 130 are shown in the illustrated example for ease of illustration, it should be appreciated that there can be any number of vehicles 120 and telematics devices 130. In some cases, the fleet management system 110 may manage hundreds, thousands, or even millions of vehicles 120 and telematics devices 130.

The telematics devices 130 can be standalone devices that are removably installed in the vehicles 120. Alternatively, the telematics devices 130 can be integrated components that are integral with the vehicles 120. The telematics devices 130 can gather various telematics data from the vehicles 120 and share the telematics data with the fleet management system 110. The telematics data may include any information, parameters, attributes, characteristics, and/or features associated with the vehicles 120. For example, the telematics data can include, but is not limited to, location data, speed data, acceleration data, engine data, brake data, transmission data, fluid data (e.g., oil, coolant, and/or washer fluid), energy data (e.g., battery and/or fuel level), odometer data, vehicle identifying data, error/diagnostic data, tire data, seatbelt data, and/or airbag data. In some cases, the telematics data may include information related to the telematics devices 130 and/or other devices associated with the telematics devices 130.

The fleet management system 110 can process the telematics data collected from the telematics devices 130 to provide various analysis, predictions, and reporting. For example, the fleet management system 110 can process the telematics data to gain additional information regarding the vehicles 120, such as, but not limited to, trip distances/times, idling times, harsh braking/driving, usage rate, and/or fuel economy. Various data analytics and machine learning techniques may be used by the fleet management system 110 to process the telematics data. The telematics data can then be used to manage various aspects of the vehicles 120, such as, but not limited to, route planning, vehicle maintenance, driver compliance, asset utilization, and/or fuel management. In this manner, the fleet management system 110 can improve the productivity, efficiency, safety, and/or sustainability of the vehicles 120.

A plurality of computing devices 150 can provide access to the fleet management system 110 to a plurality of users 160. This may allow the users 160 to manage and track the vehicles 120, for example, using various telematics data collected and/or processed by the fleet management system 110. The computing devices 150 can be any computers, such as, but not limited to, personal computers, portable computers, wearable computers, workstations, desktops, laptops, smartphones, tablets, smartwatches, PDAs (personal digital assistants), and/or mobile devices. The computing devices 150 can be remotely located from the fleet management system 110, telematics devices 130, and vehicles 120. Although only three computing devices 150 operated by three users 160 are shown in the illustrated example for ease of illustration, it should be appreciated that there can be any number of computing devices 150 and users 160. In some cases, the fleet management system 110 may service hundreds, thousands, or even millions of computing devices 150 and users 160.

The fleet management system 110, telematics devices 130, and computing devices 150 can communicate through one or more networks 140. The networks 140 may be wireless, wired, or a combination thereof. The networks 140 may employ any communication protocol and utilize any communication medium. For example, the networks 140 may include, but is not limited to, Wi-Fi™ networks, Ethernet networks, Bluetooth™ networks, NFC (near-field communication) networks, radio networks, cellular networks, and/or satellite networks. The networks 140 may be private, public, or a combination thereof. For example, the networks 140 may include, but is not limited to, LANs (local area networks), WANs (wide area networks), and/or the Internet. The networks 140 may also facilitate communication with other devices and systems that are not shown.

The fleet management system 110 can be implemented using one or more computers. For example, the fleet management system 110 may be implemented using one or more computer servers. The servers can be distributed across a wide geographical area. In some embodiments, the fleet management system 110 may be implemented using a cloud computing platform, such as Google Cloud Platform™ or Amazon Web Services™. In other embodiments, the fleet management system 110 may be implemented using one or more dedicated computer servers.

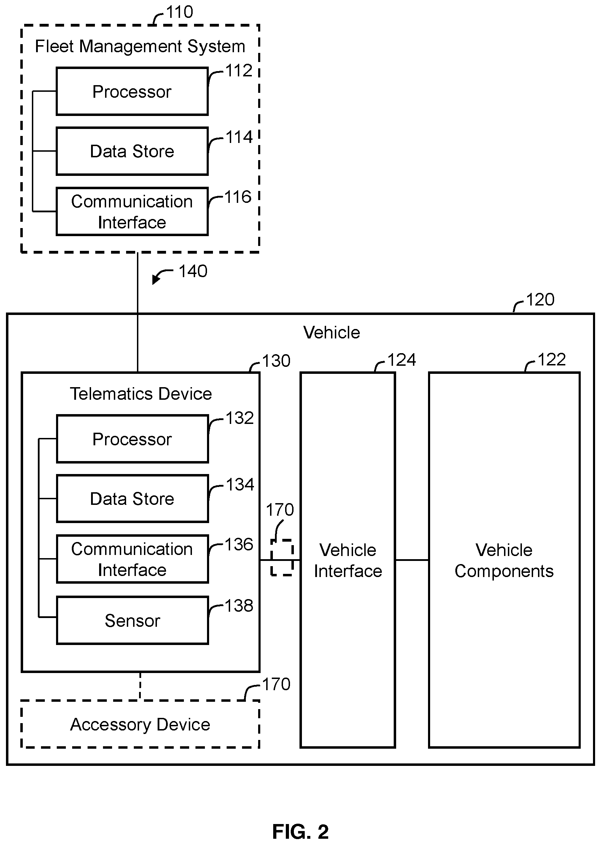

Reference will now be made to FIG. 2 to further explain the operation of the fleet management system 110, telematics devices 130, and vehicles 120. In the illustrated example, the fleet management system 110 in communication with a telematics device 130 that is installed in a vehicle 120.

As shown, the fleet management system 110 can include one or more processors 112, one or more data stores 114, and one or more communication interfaces 116. Each of these components may communicate with each other. Each of these components may be combined into fewer components or divided into additional subcomponents. Two or more of these components and/or subcomponents may be distributed across a wide geographical area.

The processors 112 can control the operation of the fleet management system 110. The processors 112 can be implemented using any suitable processing devices or systems, such as, but not limited to, CPUs (central processing units), GPUs (graphics processing units), FPGAs, (field programmable gate arrays), ASICs (application specific integrated circuits), DSPs (digital signal processors), NPUs (neural processing units), QPUs (quantum processing units), microprocessors, and/or controllers. The processors 112 can execute various computer instructions, programs, and/or software stored on the data stores 114 to implement various methods described herein. For example, the processors 112 may process various telematics data collected by the fleet management system 110 from the telematics device 130.

The data stores 114 can store various data for the fleet management system 110. The data stores 114 can be implemented using any suitable data storage devices or systems, such as, but not limited to, RAM (random access memory), ROM (read only memory), flash memory, HDD (hard disk drives), SSD (solid-state drives), magnetic tape drives, optical disc drives, and/or memory cards. The data stores 114 may include volatile memory, non-volatile memory, or a combination thereof. The data stores 114 may include non-transitory computer readable media. The data stores 114 can store various computer instructions, programs, and/or software that can be executed by the processors 112 to implement various methods described herein. The data stores 114 may store various telematics data collected from the telematics device 130 and/or processed by the processors 112.

The communication interfaces 116 can enable communication between the fleet management system 110 and other devices or systems, such as the telematics device 130. The communication interfaces 116 can be implemented using any suitable communication devices or systems. For example, the communication interfaces 116 may include various physical connectors, ports, or terminals, such as, but not limited to, USB (universal serial bus), Ethernet, Thunderbolt, Firewire, SATA (serial advanced technology attachment), PCI (peripheral component interconnect), HDMI (high-definition multimedia interface), and/or DisplayPort. The communication interfaces 116 can also include various wireless interface components to connect to wireless networks, such as, but not limited to, Wi-Fi™, Bluetooth™, NFC, cellular, and/or satellite. The communication interfaces 116 can enable various inputs and outputs to be received at and sent from the fleet management system 110. For example, the communication interfaces 116 may be used to retrieve telematics data from the telematics device 130.

As shown, the telematics device 130 also can include one or more processors 132, one or more data stores 134, and one or more communication interfaces 136. Additionally, the telematics device 130 can include one or more sensors 138. Each of these components may communicate with each other. Each of these components may be combined into fewer components or divided into additional subcomponents.

The processors 132 can control the operation of the telematics device 130. Like the processors 112 of the fleet management system 110, the processors 132 of the telematics device 130 can be implemented using any suitable processing devices or systems. The processors 132 can execute various computer instructions, programs, and/or software stored on the data stores 134. For example, the processors 132 can process various telematics data gathered from the vehicle components 122 or the sensors 138.

The data stores 134 can store various data for the telematics device 130. Like the data stores 114 of the fleet management system 110, the data stores 134 of the telematics device 130 can be implemented using any suitable data storage devices or systems. The data stores 134 can store various computer instructions, programs, and/or software that can be executed by the processors 132. The data stores 134 can also store various telematics data gathered from the vehicle components 122 or the sensors 138.

The communication interfaces 136 can enable communication between the telematics device 130 and other devices or systems, such as the fleet management system 110 and vehicle components 122. Like the communication interfaces 116 of the fleet management system 110, the communication interfaces 136 of the telematics device 130 can be implemented using any suitable communication devices or systems. The communication interfaces 136 can enable various inputs and outputs to be received at and sent from the telematics device 130. For example, the communication interfaces 136 may be used collect telematics data from the vehicle components 122 and sensors 138 or to send telematics data to the fleet management system 110. The communication interfaces 136 can also be used to connect the telematics device 130 with one or more accessory devices 170.

The sensors 138 can detect and/or measure various environmental events and/or changes. The sensors 138 can include any suitable sensing devices or systems, including, but not limited to, location sensors, velocity sensors, acceleration sensors, orientation sensors, vibration sensors, proximity sensors, temperature sensors, humidity sensors, pressure sensors, optical sensors, and/or audio sensors. When the telematics device 130 is installed in the vehicle 120, the sensor 138 can be used to gather telematics data that may not be obtainable from the vehicle components 122. For example, the sensors 138 may include a satellite navigation device, such as, but not limited to, a GPS (global positioning system) receiver, which can measure the location of the vehicle 120. As another example, the sensor 138 may include accelerometers, gyroscopes, magnetometers, and/or IMUs (inertial measurement units), which can measure the acceleration and/or orientation of the vehicle 120.

In some cases, the telematics device 130 may operate in conjunction with one or more accessory devices 170 that are in communication with the telematics device 130. The accessory devices 170 can include expansion devices that can provide additional functionality to the telematics device 130. For example, the accessory devices 170 may provide additional processing, storage, communication, and/or sensing functionality through one or more additional processors, data storages, communication interfaces, and/or sensors (not shown). The accessory devices 170 can also include adapter devices that facilitate communication between the communication interface 136 and the vehicle interfaces 124, such as a cable harness.

The telematics device 130 can be installed within the vehicle 120, removably or integrally. One or more accessory devices 170 can also be installed in the vehicle 120 along with the telematics device 130. As shown, the vehicle 120 can include one or more vehicle components 122 and one or more vehicle interfaces 124. Each of these components may be combined into fewer components or divided into additional subcomponents.

The vehicle components 122 can include any subsystems, parts, and/or subcomponents of the vehicle 120. The vehicle components 122 can be used to operate and/or control the vehicle 120. For example, the vehicle components 122 can include, but are not limited to, powertrains, engines, transmissions, steering, braking, seating, batteries, doors, and/or suspensions. The telematics device 130 can gather various telematics data from the vehicle components 122. For example, the telematics device 130 may communicate with one or more ECUs (electronic control units) that control the vehicle components 122 and/or one or more internal vehicle sensors.

The vehicle interfaces 124 can facilitate communication between the vehicle components 122 and other devices or systems. The vehicle interfaces 124 can include any suitable communication devices or systems. For example, the vehicle interfaces 124 may include, but is not limited to, ODB-II (on-board diagnostics) ports and/or CAN (controller area network) buses. The vehicle interfaces 124 can be used by the telematics device 130 to gather telematics data from the vehicle components 122. For example, the communication interfaces 136 of the telematics device 130 can be connected to the vehicle interfaces 124 to communicate with the vehicle components 122. In some cases, an accessory device 170, such as a wire harness, can provide the connection between the communication interface 136 and the vehicle interface 124.

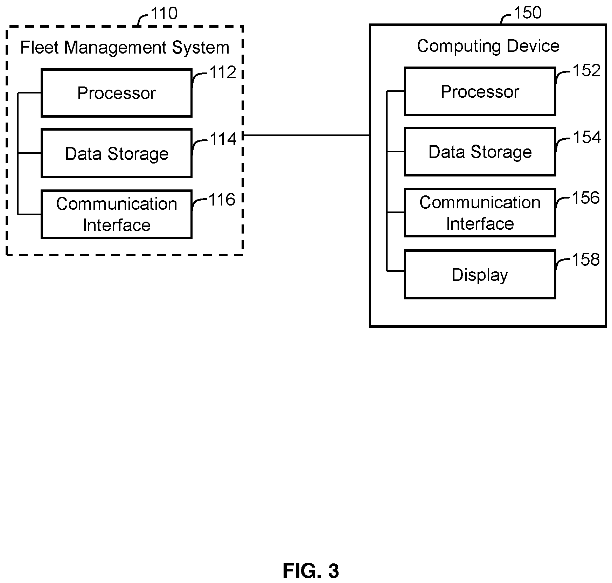

Reference will now be made to FIG. 3 to further explain the operation of the fleet management system 110 and computing devices 150. In the illustrated example, the fleet management system 110 in communication with a computing device 150. As shown, the computing device 150 also can include one or more processors 152, one or more data stores 154, and one or more communication interfaces 156. Additionally, the computing device 150 can include one or more displays 158. Each of these components can communicate with each other. Each of these components may be combined into fewer components or divided into additional subcomponents.

The processors 152 can control the operation of the computing device 150. Like the processors 112 of the fleet management system 110 and the processors 132 of the telematics device 130, the processors 152 of the computing device 150 can be implemented using any suitable processing devices or systems. The processors 152 can execute various computer instructions, programs, and/or software stored on the data stores 154 to implement various methods described herein. For example, the processors 152 may process various telematics data received from the fleet management system 110 and/or the telematics device 130.

The data stores 154 can store various data for the computing device 150. Like the data stores 114 of the fleet management system 110 and the data stores 134 of the telematics device 130, the data stores 154 of the computing device 150 can be implemented using any suitable data storage devices or systems. The data stores 154 can store various computer instructions, programs, and/or software that can be executed by the processor 152 to implement various methods described herein. The data stores 154 may store various telematics data received from the fleet management system 110 and/or the telematics device 130.

The communication interfaces 156 can enable communication between the computing device 150 and other devices or systems, such as the fleet management system 110. Like the communication interfaces 116 of the fleet management system 110 and the communication interfaces 136 of the telematics device 130, the communication interfaces 156 of the computing device 150 can be implemented using any suitable communication devices or systems. The communication interfaces 156 can enable various inputs and outputs to be received at and sent from the computing device 150. For example, the communication interfaces 116 may be used to retrieve telematics data from the fleet management system 110.

The displays 158 can visually present various data for the computing device 150. The displays 158 can be implemented using any suitable display devices or systems, such as, but not limited to, LED (light-emitting diode) displays, LCDs (liquid crystal displays), ELDs (electroluminescent displays), plasma displays, quantum dot displays, and/or cathode ray tube (CRT) displays. The displays 158 can be an integrated component that is integral with the computing device 150 or a standalone device that is removably connected to the computing device 150. The displays 158 can present various user interfaces for various computer applications, programs, and/or software associated with various methods described herein. For example, the displays 158 may display various visual representations of the telematics data.

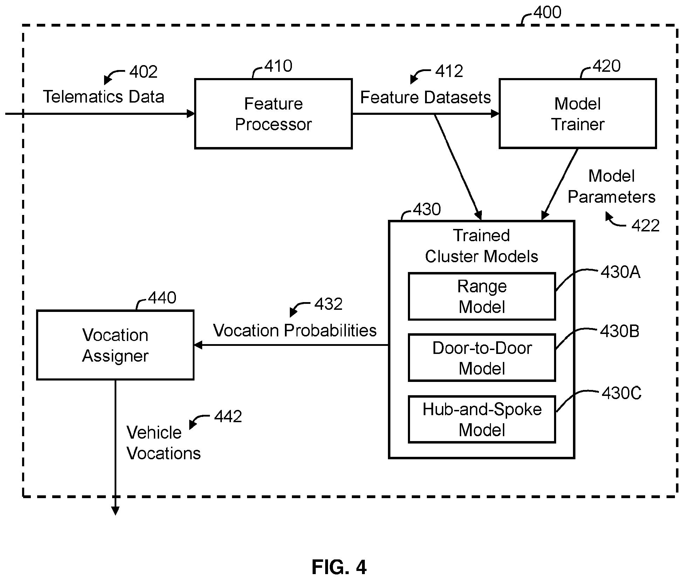

Reference will now be made to FIG. 4, which illustrates an example system 400 for determining vehicle vocations. The vehicle vocation system 400 can be used to classify one or more vehicles 120 according to their operational behaviour or purpose, herein referred to as vocation. The vocation of a vehicle 120 can be independent of the vehicle's fleet, industry, or even vehicle type. In operation, the vehicle vocation system 400 can process various telematics data 402 associated with a vehicle 120 (e.g., originating from a telematics device 130 installed in the vehicle 120) to determine the vehicle's vocation 442.

The vehicle vocation system 400 can be implemented using the fleet management system 110, one or more telematics devices 130, one or more computing devices 150, or a combination thereof. For example, the vehicle vocation system 400 may be implemented by one or more processors 112, 132, 152 executing instructions stored on one or more data stores 114, 134, 154. An advantage of implementing at least a portion of the vehicle vocation system 400 at the fleet management system 110 (i.e., remote from telematics devices 130 and computing devices 150) is that less processing may be executed at the telematics devices 130 and/or computing devices 150. Hence, the hardware complexity and cost of the telematics devices 130 and/or computing devices 150 can be reduced. Furthermore, it may be easier to update and/or modify software running on the fleet management system 110 as compared to the telematics devices 130 and/or computing devices 150. An advantage of implementing at least a portion of the vehicle vocation system 400 at the telematics devices 130 and/or computing devices 150 (i.e., remote from the fleet management system 110) is that less data may be transmitted between the fleet management system 110 and the telematics devices 130 and/or computing device 150. Hence, network usage and bandwidth on the network 140 can be reduced. This may reduce usage costs associated with the network 140.

As shown, the vehicle vocation system 400 can include a feature processor 410, a model trainer 420, a plurality of trained cluster models 430, and a vocation assigner 440. Each of these components may be combined into fewer components or divided into additional subcomponents. Two or more of these components and/or subcomponents may be distributed across a wide geographical area.

The feature processor 410 can process telematics data 402 associated with a vehicles 120 to extract a plurality of feature datasets 412. Each feature dataset 412 can include various collections of data (i.e., features) that can be used by the trained cluster models 430 and/or model trainer 420. The feature datasets 412 can be used by corresponding trained cluster models 430 to determine one or more vocation probabilities 432. The feature datasets 412 can also be used by the model trainer 420 to train corresponding cluster models 430 and determine corresponding model parameters 422.

The processing performed on the telematics data 402 by the feature processor 410 may vary. In some cases, the pertinent data for a feature dataset 412 may already exist in the telematics data 402 and the feature processor 410 can simply retrieve that data to form the feature dataset 412. In other cases, the feature processor 410 may need to derive the pertinent data for a feature dataset 412 from the telematics data 402. For example, the feature processor 410 may process GPS data to determine distances traveled by the vehicle 120. As another example, the feature processor 410 may process accelerometer, GPS, or ignition data to detect stops completed by the vehicle 120. The stop data may be further processed to identify domiciles of the vehicle 120 and round trips performed by the vehicle 120. In addition, the feature processor 410 may normalize or transform various data. For example, the feature processor 410 may rescale different types of data within a feature dataset 412 to a common scale. In general, the feature processor 410 can perform any processing necessary to produce the plurality of feature datasets 412 from the telematics data 402.

The feature datasets 412 can include a first dataset associated with distances traveled by the vehicle 120, which can be referred to as a range dataset. The inventors recognized and realized that a cluster model 430 trained using the range dataset could be used to classify local, regional-haul, and long-haul vehicles. Local vehicles can include vehicles that typically have a relatively small geographic range (e.g., less than 241 km or 150 miles - the short-haul exception for hours of service regulations in the US). Regional-haul vehicles can include vehicles that typically have a relatively large geographic range (e.g., greater than 241 km), but do return to the same domicile when not in use. Long-haul vehicle can include vehicles that typically have a relatively large geographic range (e.g., greater than 241 km) and do not return to the same domicile when not in use.

In some embodiments, the range dataset can include data indicative of a longest straight-line distance between locations visited by the vehicle 120. This distance can be calculated by determining a convex haul of the locations (i.e., the smallest polygon which contains all of the locations), and determining the longest bisector (i.e., cross-section) of the convex haul. The locations visited by the vehicle 120 may be aggregated into regions, such as geohashes, to reduce the number of points used to determine the convex haul.

In some embodiments, the range dataset can include data indicative of an average daily displacement of the vehicle 120. The daily displacement of the vehicle 120 can be calculated by determining the "as the crow flies" distance (i.e., air-mile distance) between the start and end locations of the vehicle 120 for a given day. The average may not include displacements on days where the vehicle 120 did not operate (i.e., non-workdays). The displacement feature may account for vehicles 120 that take relatively long trips within a small geographical area.

In some embodiments, the range dataset can include data indicative of a percentage of domicile stops at a primary domicile of the vehicle 120. A domicile stop can be determined by identifying the longest stop of a vehicle for a particular day. The primary domicile of the vehicle 120 can be determined by identifying the most common location at which a vehicle 120 completes a domicile stop. Domiciles may provide a geographic-agnostic way of determining how far a vehicle travels from its "home" and how often the vehicle "sleeps" at or away from its "home".

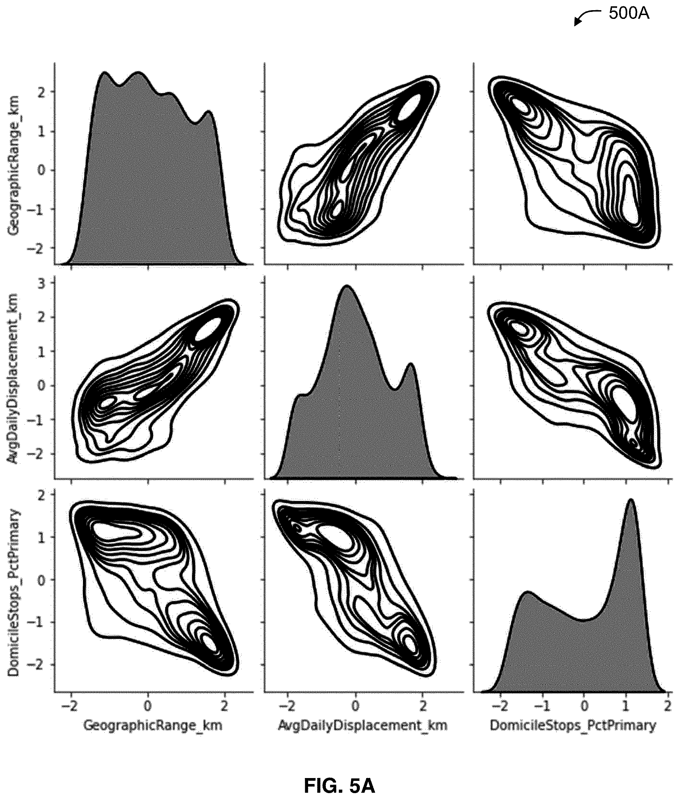

Reference will now be made to FIG. 5A, which shows a plurality of example range datasets 500A containing data associated with distances traveled by a plurality of vehicle 120. As shown, the range dataset 500A can include (i) a longest straight-line distance between locations visited by each vehicle 120 (i.e., "GeographicRange_km"), (ii) an average daily displacement of each vehicle 120 (i.e., "AvgDailyDisplacement_km"), and (iii) a percentage of domicile stops at a primary domicile of each vehicle 120 (i.e., "DomicileStops_PctPrimary").

Referring back to FIG. 4, the feature datasets 412 can also include a second dataset associated with stops completed by the vehicle 120, which may be referred to as a stop dataset. The inventors recognized and realized that a cluster model 430 trained using the stop dataset could be used to classify door-to-door vehicles. Door-to-door vehicles can include any vehicles that typically make a relatively large number of stops per day, but spend a relatively small amount of time at each stop. For example, door-to-door vehicles may include vehicles involved in last-mile delivery, waste collection, postal/parcel services, and the like.

In some embodiments, the stop dataset can include data indicative of an average daily number of stops completed by the vehicle 120. The stops completed by the vehicle 120 may be filtered to remove stops caused due to traffic (e.g., traffic lights, stop signs, congestion, etc.), while keeping stops due to fleet behaviour (e.g., stops at a customer, idling to make a delivery, etc.). Additionally, or alternatively, consecutive stops at the same location may be aggregated and treated as a single stop with a duration equal to the sum of the consecutive stops. The average may not include stops on days where the vehicle 120 did not operate (i.e., non-workdays). In some embodiments, the second dataset may include data indicative of an average duration of stop completed by the vehicle 120.

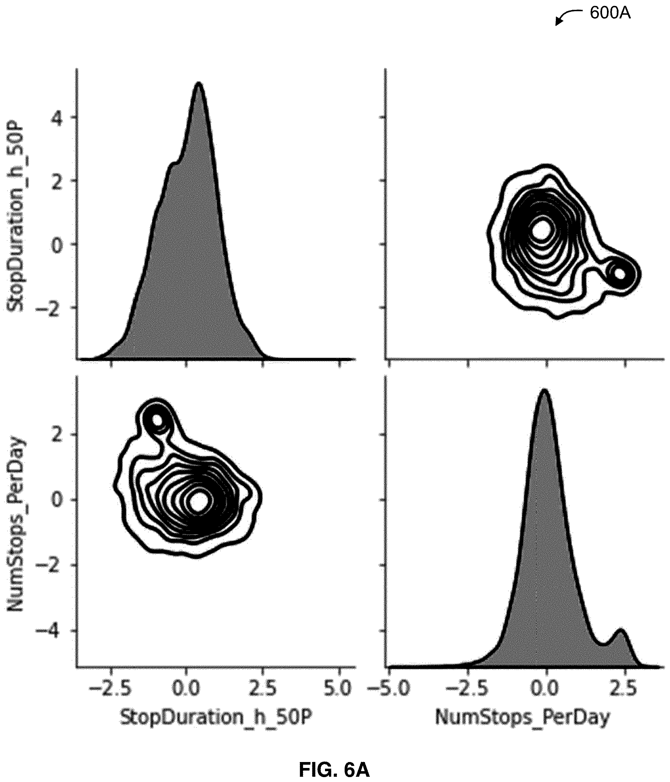

Reference will now be made to FIG. 6A, which shows a plurality of example stop datasets 600A containing data associated with stops completed by a plurality of vehicles 120. As shown, the stop dataset 600A can include (i) a average daily number of stops completed by the vehicle 120 (i.e., "NumStops_PerDay"), and (ii) an average duration of stop completed by the vehicle 120 (i.e., "StopDuration_h_50P").

Referring back to FIG. 4, the feature datasets 412 can also include a third dataset associated with round trips performed by the vehicle 120, which may be referred to as a round trip dataset. The inventors recognized and realized that a cluster model 430 trained using the round-trip dataset could be used to classify hub-and-spoke vehicles. Hub-and-spoke vehicles can include any vehicles 120 that typically make multiple round trips from a singular location (i.e., a centralized hub).

In some embodiments, the third dataset can include data indicative of a percentage of days with multiple round trips performed by the vehicle 120. The round trips can be determined by identifying the trips or series of trips that begin and end at the vehicle's daily domicile (i.e., the location where the vehicle is stopped longest each day). The average may not include days where the vehicle 120 was not used (i.e., non-work days).

In some embodiments, the third dataset can include data indicative of an average daily number of round trips performed by the vehicle 120. A round trip can be determined by identifying a trip or series of trips that begins and ends at the vehicle's daily domicile (i.e., the location where the vehicle is stopped longest during a day). The average may not include days where the vehicle 120 was not used (i.e., non-work days).

In some embodiments, the third dataset can include data indicative of a percentage of distance traveled by the vehicle 120 that were part of a round trip. A round trip can be determined by identifying a trip or series of trips that begins and ends at the vehicle's daily domicile (i.e., the location where the vehicle is stopped longest during a day).

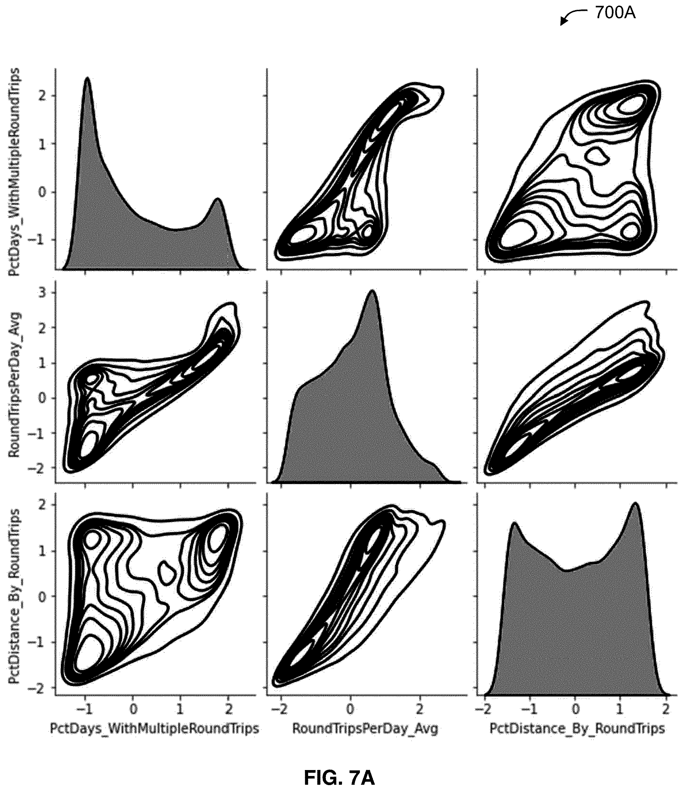

Reference will now be made to FIG. 7A, which shows a plurality of example round trip datasets 700A containing data associated with round trips performed by a plurality of vehicle 120. As shown, the round trip dataset 700A can include (i) a percentage of days with multiple round trips performed by the vehicle 120 (i.e., "PctDays_WithMultipleRoundtrips"), (ii) an average daily number of round trips performed by the vehicle 120 (i.e., "RoundTripsPerDay_Avg"), and (iii) of a percentage of distance traveled by the vehicle 120 that were part of a round trip (i.e., "PctDistnace_By_RoundTrips").

Referring back to FIG. 4, the trained cluster models 430 can be applied to corresponding feature datasets 412 to determine vocation probabilities 432. Each vocation probability 432 can represent the probability that the vehicle 120 belongs to a particular vocation. The trained cluster models 430 can generally be applied to the feature datasets 412 in any order. In some embodiments, the trained cluster models 430 may be applied to the feature datasets 412 in parallel. In other words, each trained cluster model 430 can be applied to a corresponding feature dataset 412 at substantially the same time.

In the illustrated example, the trained cluster models 430 include a first trained cluster model 430A, a second trained cluster model 430B, and a third trained cluster model 430C. The first trained cluster model 430A, which may be referred to as a range model 430A, can be operable to determine a probability 432 of whether the vehicle 120 is local, regional-haul, or long-haul using the range dataset. The second trained cluster model 430B, which may be referred to as a door-to-door model 430B, can be operable to determine a probability 432 of whether the vehicle 120 is door-to-door using the stop dataset. The third trained cluster model 430C, which can be referred to as a hub-and-spoke model 430C, may be operable to determine a probability 432 of whether the vehicle 120 is hub-and-spoke using the round-trip dataset. Reference will now be made to FIGS. 4B, 5B, and 6B to illustrate the operation of the range, door-to-door, and hub-and-spoke models 430A, 430B, and 430C.

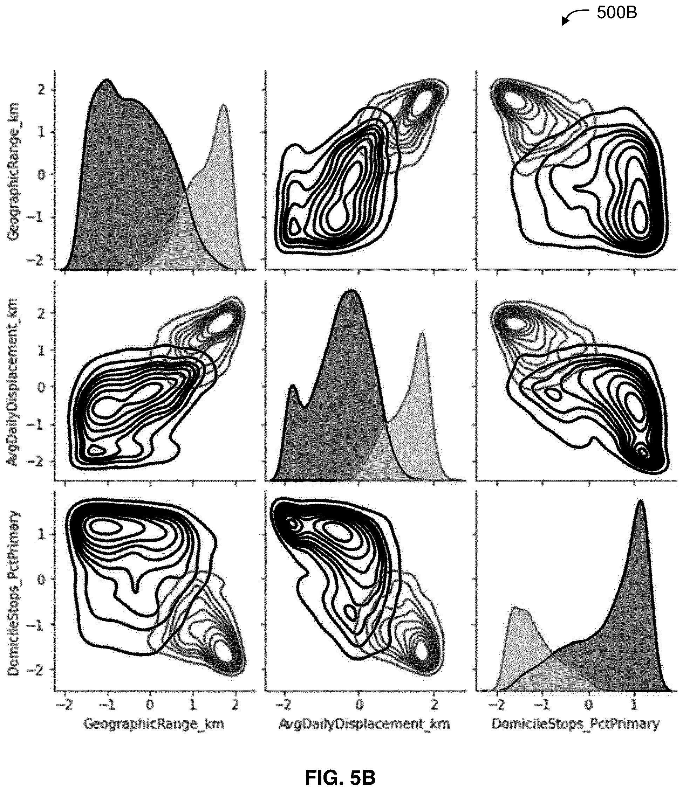

FIG. 5B shows an example clustering of the plurality of range datasets 500A shown in FIG. 5A using the range model 430A. Two distinct clusters can clearly be identified - a first cluster representing long-haul vehicles and a second cluster representing local and regional-haul vehicles. As shown, vehicles 120 in the second cluster tend to stay at a primary domicile, tend to return to where they start the workday, and generally have a lower geographic range. On the other hand, vehicles 120 in the first cluster that do not tend to stay at a primary domicile, do not return to the same location in a day, and have a larger geographic range. As demonstrated by the distinct clusters, the range model 430A can effectively distinguish long-haul vehicles from local and regional-haul vehicles using the range dataset. The local vehicles and regional-haul cluster can further be separated using a 241 km / 150 mile threshold.

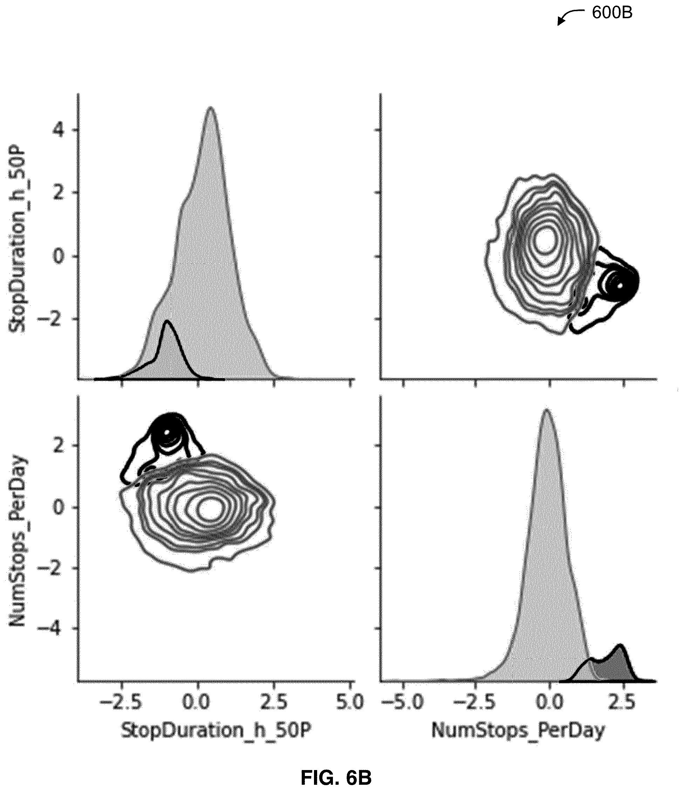

FIG. 6B shows an example clustering of the plurality of stop datasets 600A shown in FIG. 6A using the door-to-door model 430B. Two distinct clusters can clearly be identified - a first cluster representing door-to-door vehicles and a second cluster representing other (i.e., non-door-to-door) vehicles. As shown by the distinct clusters, the door-to-door model 430B can effectively distinguish door-to-door vehicles from other vehicles.

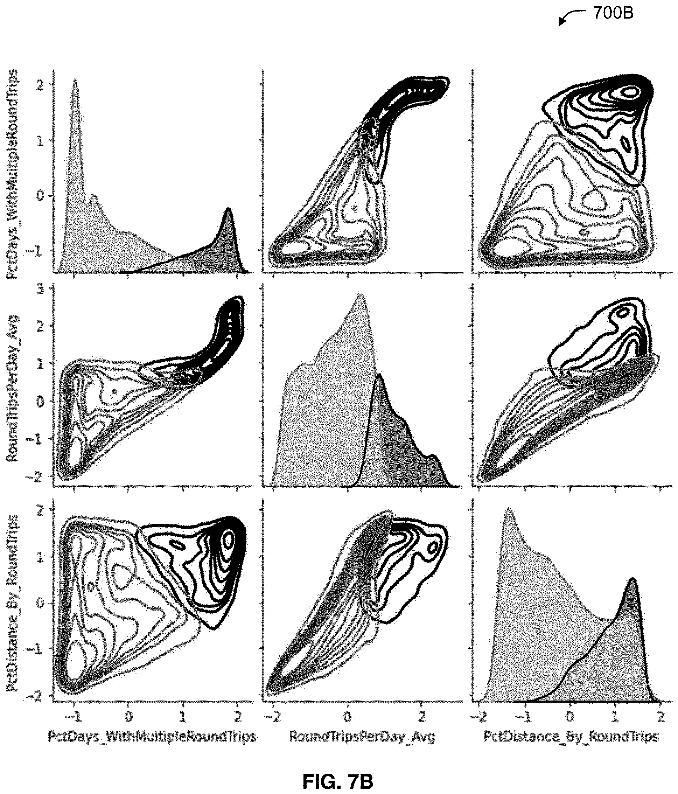

FIG. 7B shows an example clustering of the plurality of round-trip datasets 700A shown in FIG. 7A using the hub-and-spoke model 430C. Two distinct clusters can clearly be identified - a first cluster representing hub-and-spoke vehicles and a second cluster representing other vehicles. As shown, vehicles 120 in the first cluster have many workdays involving multiple round trips, more round trips per day, and a higher percentage of mileage being round trips. On the other hand, vehicles 120 in the second cluster tend to return home nightly, having a large percentage of mileage from round trips, but very few multi round-trip workdays. As demonstrated by the distinct clusters, the third trained cluster model 430C can effectively distinguish hub-and-spoke vehicles from other vehicles.

Referring back to FIG. 4, the trained cluster models 430 can generally be any type of clustering model, including, but not limited to, connectivity-based or hierarchical clustering, centroid-based clustering, distribution-based clustering, density-based clustering, grid-based clustering, and the like. However, it may be advantageous to utilize cluster models that are trained using unsupervised learning (i.e., using unlabeled data). In this manner, the models can reflect natural patterns in the data, rather than specific vehicle behaviour that is prescribed by labeling. Furthermore, errors and biases that may be introduced through labeling can be avoided - it can be difficult, expensive, and time consuming to ensure labeling is correct and consistent.

Various types of clustering models trained using unsupervised learning may be utilized in the vehicle vocation system 400. However, it may be particularly advantageous to utilize Gaussian mixture models. Gaussian mixture models can effectively model clusters having vastly different shapes and densities, unlike k-means, DBSCAN, OPTICS, and other popular clustering methods. Hence, Gaussian mixture models can be particularly well suited to model the random and dramatic differences in driving behavior that can exist between different vocations. Furthermore, Gaussian mixture models can be less computationally expensive to use compared to other clustering methods. Hence, Gaussian mixture models may be better suited to process large quantities of data to classify large numbers of vehicles. At scale, this may significantly reduce the number of computational resources required to process thousands, or even millions of vehicles. The inventors recognized and realized these advantages and used Gaussian mixture models to achieve the clustering shown in FIGS. 4B, 5B, and 6B.

A Gaussian mixture model can represent a mixture or combination of Gaussian or normal distributions. For example, the model can be expressed as a weighted sum of the Gaussian distributions as follows:

$$p(x) = \sum_{k=1}^{K} \pi_k \mathcal{N}\left(x \mid \mu_k, \Sigma_k\right)$$

where $x$ is a data point, $p$ is the probability of $x$ occurring, $K$ is the number of Gaussians, $\pi_k$ is the weight of each Gaussian, $\mathcal{N}$ is the probability distribution of each Gaussian, $\mu_k$ is the mean of each Gaussian, and $\Sigma_k$ is the variance of each Gaussian.

Although there can be various advantages to using trained cluster models 430, particularly Gaussian mixture models, it should be appreciated that various other types of trained machine learning models may be employed by the vehicle vocation system 400, in some embodiments. The models may be trained using supervised, unsupervised, semi-supervised, reinforcement, or other types of learning. The models may include, but are not limited to, artificial neural networks, decision trees, support-vector machines, nearest neighbors, linear regression, logistical regression, Bayesian networks, random forests, genetic algorithms, ensemble models, and the like. In general, the models may include any machine learning models that are trained to predict a vocation probability 432 based on a feature dataset 412, without being explicitly programmed to do so. It should be appreciated that although three trained cluster models 430 are shown in the illustrated example, the vehicle vocation system 400 may include any number of models of any type.

The vocation assigner 440 can assign a vocation 442 to the vehicle 120 based on the vocation probabilities 432. The vocation assigner 440 can determine the vehicle vocation 442 in various ways.

In some embodiments, the vocation assigner 440 may compare two or more vocation probabilities 432 to determine the vehicle vocation 442. The vocation assigner 440 may assign a vocation 442 to the vehicle 120 based on which vocation probability 432 is highest. For example, the range model 430A may generate three vocation probabilities 432: a probability that the vehicle 120 is a local vehicle, a probability that the vehicle 120 is a regional-haul vehicle, and a probability that the vehicle 120 is a long-haul vehicle. The vocation assigner 440 can determine whether the vehicle is a local, regional-haul, or long-haul vehicle based on which vocation probability 432 is highest.

In some embodiments, the vocation assigner 440 can use one or more predetermined probability thresholds to determine the vehicle vocation 442. The vocation assigner 440 may assign a vocation 442 to the vehicle 120 if the probability 432 of that vocation exceeds the predetermined probability threshold. For example, if a vehicle 120 has a probability of being a door-to-door vehicle that is greater than 50%, the vehicle 120 may be classified as a door-to-door vehicle. As another example, if a vehicle 120 has a probability of being a hub-and-spoke vehicle that is greater than 95%, the vehicle 120 may be classified as a hub-and-spoke vehicle. The predetermined probability thresholds may vary depending on the vocation and/or model 430.

In some embodiments, the vocation assigner 440 may utilize one or more predetermined priorities to determine the vehicle vocation 442. The predetermined priorities may define the order or precedence in which the vocation probabilities 432 are evaluated. For example, door-to-door vehicles may be designated a first priority level, hub-and-spoke vehicles may be designated a second priority level, and local, regional-haul, and long-haul vehicles may be designated a third priority level. Hence, the probability of the vehicle 120 being a door-to-door vehicle may be evaluated prior to the probability of the vehicle 120 being a hub-and-spoke, local, regional-haul, or long-haul vehicle. As a result, some lower priority vocation probabilities 432 may not be evaluated when determining of the vehicle vocation 242.

In some embodiments, the vocation assigner 440 may utilize one or more confidence scores to determine the vehicle vocation 442. For example, the vocation assigner 440 may assign a vehicle vocation 442 to the vehicle 120 if the confidence score for that vehicle vocation 442 exceeds a predetermined confidence threshold. A confidence score can be determined based on a vocation probability 432 and the vocation probabilities 432 of one or more incompatible vocations. A vocation can be defined as incompatible with another vocation if the vocations have conflicting, inconsistent, or otherwise contradictory operational behaviours. For example, door-to-door vehicles may be considered incompatible with long-haul vehicles, hub-and-spoke vehicles may be considered to be incompatible with long-haul vehicles, local vehicles may be considered to be incompatible with door-to-door and hub-and-spoke vehicles, regional-haul vehicles may be considered to be compatible with door-to-door and hub-and-spoke vehicles, and long-haul vehicles may be considered to be incompatible with door-to-door and hub-and-spoke vehicles. In some cases, the confidence score of each vocation can be determined as the probability of that vocation multiplied by complimentary probabilities of incompatible vocations. For example, if a given vehicle 120 has a 20% probability to be a door-to-door vehicle, a 30% probability to be a hub-and-spoke vehicle, and an 80% probability to be a local vehicle, the confidence score of the vehicle being a local vehicle may be determined to be:

$$0.8 * (1 - 0.2) * (1 - 0.3) = 0.448$$

The model trainer 420 can train the cluster models 430 using the feature datasets 412 as training data. For instance, in the illustrated example, the range data set can be used to train the range model 430A, the stop dataset can be used to train the door-to-door model 430B, and the round-trip dataset can be used to train the hub-and-spoke model 430C. During training, the model trainer 420 can determine model parameters 422 to define the cluster models 430. Various types of training may be performed by the model trainer 420, depending on the models 430.

In some embodiments, the model trainer 420 can perform an expectation-maximization algorithm train and determine model parameters 422 for one or more Gaussian mixture models. As described herein, the model parameters 422 can include the weight ($\pi_k$), mean ($\mu_k$), and variance ($\Sigma_k$) of each Gaussian distribution in each Gaussian mixture model. (The number of Gaussians ($K$) can be determined empirically.) The expectation-maximization algorithm can be performed by iteratively executing two steps - an expectation step and a maximization step. In the expectation step, the responsibilities of each data point can be determined using current model parameters. The responsibilities can represent the expected probabilities of particular data points belonging to particular Gaussian distributions. For example, the responsibility ($r_{ik}$) that point $i$ belongs to cluster $k$ can be determined as follows:

$$r_{ik} = p(z_i = k \mid x_i, \pi_k, \mu_k, \Sigma_k) = \frac{\pi_k \mathcal{N}(x_i \mid \mu_k, \Sigma_k)}{\sum_{j=1}^{K} \pi_j \mathcal{N}(x_i \mid \mu_j, \Sigma_j)}$$

In the maximization step, the model parameters can be adjusted based on the responsibilities calculated in the expectation step. In other words, model parameters that maximize the expected probabilities of particular data points belonging to particular distributions can be determined. For example, the model parameters 422 may be calculated as follows:

$$\pi_k = \frac{1}{N} \sum_{i=1}^{N} r_{ik} = \frac{N_k}{N}$$

$$\mu_k = \frac{1}{N_k} \sum_{i=1}^{N} r_{ik} x_i$$

$$\Sigma_k = \frac{1}{N_k} \sum_{i=1}^{N} r_{ik}(x_i - \mu_k)(x_i - \mu_k)^T$$

Starting with an initial set of model parameters, the expectation and maximization steps can be repeated to iteratively determine a final set of model parameters. The initial model parameters may be selected randomly, based on other clustering methods (e.g., K-means), or using alternative methods. During an iteration, the responsibilities can be recalculated based on the model parameters determined in the previous expectation step, and the model parameters can be recalculated based on the responsibilities determined in the previous maximization step. The iterations can continue until one or more predetermined convergence criteria are satisfied.

Although there can be various advantages to using an expectation-maximization algorithm to train Gaussian mixture models, it should be appreciated that various other parameter estimation methods may be utilized, in some embodiments. For example, various gradient-based and other approaches may be employed in some cases.

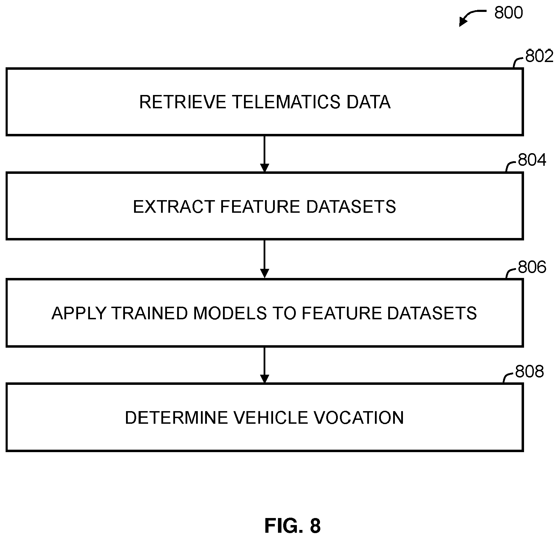

Referring now to FIG. 8, there is shown an example method 800 for determining vehicle vocation. Vehicle vocation method 800 can be performed using vehicle vocation system 400 (e.g., by one or more processors 112, 132, 152 executing instructions stored on one or more data stores 114, 134, 154).

At 802, telematics data 402 associated with a vehicle 120 can be retrieved. The telematics data 402 can originate from a telematics device 130 installed in the vehicle 120. The telematics data 402 can include the original data collected from the telematics device 130 and/or processed versions thereof (e.g., generated by the fleet management system 110). For example, the telematics data 402 may be retrieved from the fleet management system 110 (e.g., data store 114) and/or telematics device 130 (e.g., data store 134). The telematics data 402 may be retrieved by the feature processor 410. Alternatively, the telematics data 402 may be retrieved by and provided to the feature processor 410 by another component.

At 804, the telematics data 402 can be processed to extract a plurality of feature datasets 412. The feature datasets 412 can include a first dataset associated with distances traveled by the vehicle 120, a second dataset associated with stops completed by the vehicle 120, and a third dataset associated with round trips performed by the vehicle 120. For example, the feature processor 410 may process the telematics data 402 to generate the feature datasets 412. The first dataset can include at least one of: (i) a longest straight-line distance between locations visited by the vehicle, (ii) an average daily displacement of the vehicle, and/or (iii) a percentage of domicile stops at a primary domicile of the vehicle. The first dataset can include the second dataset can include at least one of: (i) an average daily number of stops completed by the vehicle, and/or (ii) an average duration of stop completed by the vehicle. The third dataset can include at least one of: (i) a percentage of days with multiple round trips performed by the vehicle, (ii) an average daily number of round trips performed by the vehicle, and/or (iii) a percentage of distance traveled by the vehicle that were part of a round trip.

At 806, a plurality of trained cluster models can be applied to the plurality of feature datasets to determine a plurality of vocation probabilities. For example, the trained cluster models 430 can be applied to the feature datasets 412 to determine the vocation probabilities 432. The trained cluster models 430 can include: a first trained cluster model 430A operable to determine a probability of whether the vehicle 120 is local, regional, or long-haul using the first data set; a second trained cluster model 430B operable to determine a probability of whether the vehicle 120 is door-to-door using the second data set; and a third trained cluster model 430C operable to determine a probability of whether the vehicle 120 is hub and spoke using the third data set. One or more of the trained cluster models 430 can be gaussian mixture models trained using an expectation-maximization algorithm. The plurality of trained cluster models 430 can be applied to the plurality of feature datasets 412 in parallel.

At 808, the vocation 442 of the vehicle 120 can be determined based on the plurality of vocation probabilities 432. For example, the vocation assigner 440 may determine the vocation 442 based on the vocation probabilities 432. As described herein, the vocation assigner 440 may determine the vocation 442 based on a predetermined priority of each vocation and a predetermined probability threshold. Additionally, or alternatively, the vocation assigner 440 may determine a confidence score for each vocation probability 432 based on that vocation probability and at least one incompatible vocation probability and determine the vocation 442 of the vehicle 120 based on the plurality of vocation probabilities 432 and the confidence score for each vocation probability.

It should be appreciated that method 800 can be re-executed at different times to update or refresh the vocation 442 of the vehicle 120. In this manner, the vocation of the vehicle 120 can be updated as more telematics data 402 becomes available. In some cases, the vocation of the vehicle 120 can be updated monthly based on the telematics data 402 collected during the previous month. A monthly cadence can provide a good balance between the stability of the vocation 442 and the vocation 442 being up to date. However, it should be understood that method 800 can be re-executed at any regular or irregular cadence. Method 800 can also be re-executed to determine the vocations 442 for multiple vehicles 120.

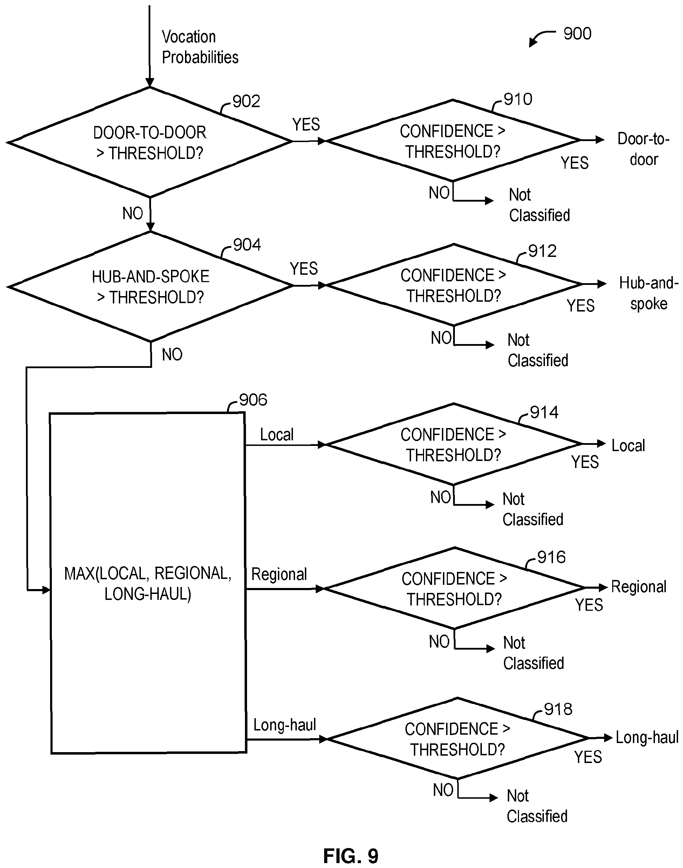

Referring now to FIG. 9, there is shown another example method 900 for determining vehicle vocation. Vehicle vocation method 900 can be performed at step 808 of vehicle vocation method 800 to determine the vocation of the vehicle 120 based on the plurality of vocation probabilities 432. Vehicle vocation method 900 can be performed by the vocation assigner 440 of the vehicle vocation system 400 (e.g., by one or more processors 112, 132, 152 executing instructions stored on one or more data stores 114, 134, 154).

At 902, it can be determined whether the probability of the vehicle 120 being door-to-door is greater than a predetermined probability threshold. As described herein, the probability of the vehicle 120 being a door-to-door vehicle can be determined using the door-to-door model 430B and the stop dataset. If the probability of the vehicle 120 being a door-to-door vehicle is greater than the predetermined probability threshold, the method 900 can proceed to 910. Otherwise, the method can proceed to 904. In some embodiments, the predetermined probability threshold may be 50%.

At 910, it can be determined whether the confidence score of the vehicle 120 being a door-to-door vehicle is greater than a predetermined confidence threshold. As described herein, the confidence score of the vehicle 120 being a door-to-door vehicle can be determined based on the probability of the vehicle 120 being a door-to-door vehicle and the probability of the vehicle 120 being a long-haul vehicle. As described herein, door-to-door vehicles may be considered incompatible with long-haul vehicles, and the probability of the vehicle 120 being a long-haul vehicle can be determined using the range model 430A and the range dataset. If the confidence score of the vehicle 120 being a door-to-door vehicle is greater than the predetermined confidence threshold the vehicle 120 can be classified as a door-to-door vehicle. Otherwise, the vehicle 120 may not classified. In some embodiments, the predetermined confidence threshold may be 30%.

At 904, it can be determined whether the probability of the vehicle 120 being a hub-and-spoke vehicle is greater than a predetermined probability threshold. The predetermined threshold for hub-and-spoke vehicles may be the same or different as for door-to-door vehicles. As described herein, the probability of the vehicle 120 being a hub-and-spoke vehicle can be determined using the hub-and-spoke model 430C and the round-trip dataset. If the probability of the vehicle 120 being a hub-and-spoke vehicle is greater than the predetermined probability threshold, the method 900 can proceed to 910. Otherwise, the method can proceed to 904. In some embodiments, the predetermined probability threshold may be 95%.

At 912, it can be determined whether the confidence score of the vehicle 120 being a hub-and-spoke vehicle is greater than a predetermined confidence threshold. The predetermined confidence threshold for hub-and-spoke vehicles may be the same or different as door-to-door vehicles. As described herein, the confidence score of the vehicle 120 being a hub-and-spoke vehicle can be determined based on the probability of the vehicle 120 being a hub-and-spoke vehicle and the probability of the vehicle 120 being a long-haul vehicle. As described herein, hub-and-spoke vehicles may be considered incompatible with long-haul vehicle. If the confidence score of the vehicle 120 being a hub-and-spoke vehicle is greater than the predetermined confidence threshold, the vehicle 120 can be classified a hub-and-spoke vehicle. Otherwise, the vehicle 120 may not classified. In some embodiments, the predetermined confidence threshold may be 30%.

At 906, the highest probability amongst the vehicle 120 being a local vehicle, the vehicle 120 being a regional-haul vehicle, and the vehicle 120 being a long-haul vehicle can be determined. As described herein, the probability of the vehicle 120 being a local, regional, or long-haul vehicle can be determined using the range model 430A and the range dataset. If the highest probability is the vehicle 120 being a local vehicle, the method 900 can proceed to 914. If the highest probability is the vehicle 120 being a regional-haul vehicle, the method 900 can proceed to 916. If the highest probability is the vehicle 120 being a long-haul vehicle, the method 900 can proceed to 916.

At 914, it can be determined whether the confidence score of the vehicle 120 being a local vehicle is greater than a predetermined confidence threshold. The predetermined confidence threshold for local vehicles may be the same or different as door-to-door and hub-and-spoke vehicles. As described herein, the confidence score of the vehicle 120 being a local vehicle can be determined based on the probability of the vehicle 120 being a local vehicle, the probability of the vehicle 120 being a door-to-door vehicle, and the probability of the vehicle 120 being a hub-and-spoke vehicle. As described herein, local vehicles may be considered incompatible with door-to-door and hub-and-spoke vehicles. If the confidence score of the vehicle 120 being a local vehicle is greater than the predetermined confidence threshold, the vehicle 120 can be classified as a local vehicle. Otherwise, the vehicle 120 may not classified. In some embodiments, the predetermined confidence threshold may be 30%.

At 916, it can be determined whether the confidence score of the vehicle 120 being a regional-haul vehicle is greater than a predetermined confidence threshold. The predetermined confidence threshold for regional-haul vehicles may be the same or different as door-to-door, hub-and-spoke, and local vehicles. As described herein, the confidence score of the vehicle 120 being a regional-haul vehicle can be determined based on the probability of the vehicle 120 being a regional-haul vehicle, the probability of the vehicle 120 being a door-to-door vehicle, and the probability of the vehicle 120 being a hub-and-spoke vehicle. As described herein, regional-haul vehicles may be considered incompatible with door-to-door and hub-and-spoke vehicles. If the confidence score of the vehicle 120 being a regional-haul vehicle is greater than the predetermined confidence threshold, the vehicle 120 can be classified as a regional-haul vehicle.

Otherwise, the vehicle 120 may not classified. In some embodiments, the predetermined confidence threshold may be 30%.

At 918, it can be determined whether the confidence score of the vehicle 120 being a long-haul vehicle is greater than a predetermined confidence threshold. The predetermined confidence threshold for long-haul vehicles may be the same or different as door-to-door, hub-and-spoke, local, and regional-haul vehicles. As described herein, the confidence score of the vehicle 120 being a long-haul vehicle can be determined based on the probability of the vehicle 120 being a long-haul vehicle, the probability of the vehicle 120 being a door-to-door vehicle, and the probability of the vehicle 120 being a hub-and-spoke vehicle. As described herein, long-haul vehicles may be considered incompatible with door-to-door and hub-and-spoke vehicles. If the confidence score of the vehicle 120 being a long-haul vehicle is greater than the predetermined confidence threshold, the vehicle 120 can be classified as a long-haul vehicle. Otherwise, the vehicle 120 may not classified. In some embodiments, the predetermined confidence threshold may be 30%.

As shown, different vocations may be designated with different priority levels that can affect the order or precedence in which the vocation probabilities 432 are evaluated. In the illustrated example, door-to-door probabilities are evaluated prior to hub-and-spoke, local, regional-haul, or long-haul probabilities. Similarly, hub-and-spoke probabilities are evaluated prior to local, regional-haul, or long-haul probabilities. Finally, local, regional-haul, or long-haul probabilities are evaluated at the same time. Hence, door-to-door vehicles may be considered a first priority level, hub-and-spoke vehicles may be considered a second priority level, and local, regional-haul, and long-haul vehicles may be considered a third priority level. As shown, it is possible that lower priority vocations may not be evaluated if higher priority vocations exceed probability and confidence thresholds.

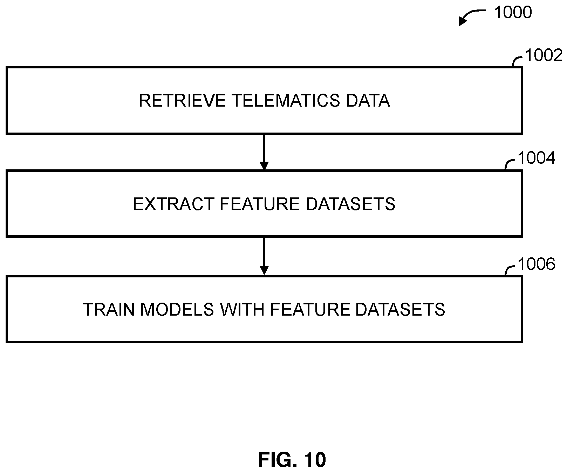

Referring now to FIG. 10, there is shown an example method 1000 for training a vehicle vocation model. Vocation model training method 1000 can also be performed using vehicle vocation system 400 (e.g., by one or more processors 112, 132, 152 executing instructions stored on one or more data stores 114, 134, 154).

At 1002, telematics data 402 associated with a plurality of vehicles 120 can be retrieved. As described herein, the telematics data 402 can originate from a plurality of telematics devices 130 installed in a plurality of vehicles 120. For example, the telematics data 402 may be retrieved from the fleet management system 110 (e.g., data store 114) and/or a plurality of telematics devices 130 (e.g., data stores 134). The telematics data 402 may be retrieved by the feature processor 410. Alternatively, the telematics data 402 may be retrieved by and provided to the feature processor 410 by another component.

At 1004, the telematics data 402 can be processed to extract a one or more feature datasets 412. As described herein, the feature datasets 412 can include a first dataset associated with distances traveled by the vehicles 120, a second dataset associated with stops completed by the vehicles 120, and a third dataset associated with round trips performed by the vehicles 120. For example, the feature processor 410 may process the telematics data 402 to generate the feature datasets 412. The first dataset can include at least one of: (i) a longest straight-line distance between locations visited by the vehicles 120, (ii) an average daily displacement of the vehicles 120, and/or (iii) a percentage of domicile stops at a primary domicile of the vehicles 120. The second dataset can include at least one of: (i) an average daily number of stops completed by the vehicles 120, and/or (ii) an average duration of stop completed by the vehicles 120. The third dataset can include at least one of: (i) a percentage of days with multiple round trips performed by the vehicles 120, (ii) an average daily number of round trips performed by the vehicles 120, and/or (iii) a percentage of distance traveled by the vehicles 120 that were a round trip.

At 1006, one or more models 430 can be trained using the one or more feature datasets. For instance, the model trainer 420 can use a range data set to train the range model 430A, a stop dataset to train the door-to-door model 430B, and a round trip data to train the hub-and-spoke model 430C. As described herein, the models 430 can be cluster models, such as Gaussian mixture models, trained using an expectation maximization algorithm. However, other types of machine-learning models and training are contemplated. During training, the model trainer 420 can determine model parameters 422 to define the models 430.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling may be used to indicate that an element or device can electrically, optically, or wirelessly send data to another element or device as well as receive data from another element or device. Furthermore, the term "coupled" may indicate that two elements can be directly coupled to one another or coupled to one another through one or more intermediate elements.

It should be noted that terms of degree such as "substantially", "about" and "approximately" as used herein mean a reasonable amount of deviation of the modified term such that the end result is not significantly changed. These terms of degree may also be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

Furthermore, any recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

The example embodiments of the systems and methods described herein may be implemented as a combination of hardware or software. In some cases, the example embodiments described herein may be implemented, at least in part, by using one or more computer programs, executing on one or more programmable devices comprising at least one processing element, and a data storage element (including volatile memory, non-volatile memory, storage elements, or any combination thereof). Programmable hardware such as FPGA can also be used as standalone or in combination with other devices. These devices may also have at least one input device (e.g., a pushbutton keyboard, mouse, a touchscreen, and the like), and at least one output device (e.g., a display screen, a printer, a wireless radio, and the like) depending on the nature of the device. The devices may also have at least one communication device (e.g., a network interface).

It should also be noted that there may be some elements that are used to implement at least part of one of the embodiments described herein that may be implemented via software that is written in a high-level computer programming language such as object-oriented programming. Accordingly, the program code may be written in C, C++ or any other suitable programming language and may comprise modules or classes, as is known to those skilled in object-oriented programming. Alternatively, or in addition thereto, some of these elements implemented via software may be written in assembly language, machine language or firmware as needed. In either case, the language may be a compiled or interpreted language.

At least some of these software programs may be stored on a storage media (e.g., a computer readable medium such as, but not limited to, ROM, magnetic disk, optical disc) or a device that is readable by a general or special purpose programmable device. The software program code, when read by the programmable device, configures the programmable device to operate in a new, specific and predefined manner in order to perform at least one of the methods described herein.

Furthermore, at least some of the programs associated with the systems and methods of the embodiments described herein may be capable of being distributed in a computer program product comprising a computer readable medium that bears computer usable instructions for one or more processors. The medium may be provided in various forms, including non-transitory forms such as, but not limited to, one or more diskettes, compact disks, tapes, chips, and magnetic and electronic storage.

The present invention has been described here by way of example only, while numerous specific details are set forth herein in order to provide a thorough understanding of the exemplary embodiments described herein. However, it will be understood by those of ordinary skill in the art that these embodiments may, in some cases, be practiced without these specific details. In other instances, well-known methods, procedures and components have not been described in detail so as not to obscure the description of the embodiments. Various modification and variations may be made to these exemplary embodiments without departing from the spirit and scope of the invention, which is limited only by the appended claims.

**Claims**

1. A system for determining a vocation of a vehicle, the system comprising:

at least one data store operable to store telematics data associated with the vehicle, the telematics data originating from a telematics device installed in the vehicle;
at least one processor operable to:

retrieve the telematics data;
process the telematics data to extract a plurality of feature datasets, the plurality of feature datasets comprising:

a first dataset associated with distances traveled by the vehicle;
a second dataset associated with stops completed by the vehicle; and
a third dataset associated with round trips performed by the vehicle;

apply a plurality of trained cluster models to the plurality of feature datasets to determine a plurality of vocation probabilities; and
determine the vocation of the vehicle based on the plurality of vocation probabilities.

2. The system of claim 1, wherein the plurality of trained cluster models are applied to the plurality of feature datasets in parallel.

3. The system of any one of claims 1 to 2, wherein determining the vocation of the vehicle is based on a predetermined priority of each vocation and a predetermined probability threshold.

4. The system of any one of claims 1 to 3, wherein the at least one processor is operable to:

determine a confidence score for each vocation probability based on that vocation probability and at least one incompatible vocation probability;
wherein determining the vocation of the vehicle is based on the plurality of vocation probabilities and the confidence score for each vocation probability.

5. The system of any one of claims 1 to 4, wherein the plurality of trained cluster model comprises:

a first trained cluster model operable to determine a probability of whether the vehicle is local, regional, or long-haul using the first data set;
a second trained cluster model operable to determine a probability of whether the vehicle is door-to-door using the second data set; and
a third trained cluster model operable to determine a probability of whether the vehicle is hub and spoke using the third data set.

6. The system of any one of claims 1 to 5, wherein at least one trained cluster model is a gaussian mixture model trained using an expectation-maximization algorithm.

7. The system of any one of claims 1 to 6, wherein determining the vocation of the vehicle comprises classifying the vehicle as one of: local, regional-haul, long-haul, door to door, and hub and spoke.

8. A method for determining a vocation of a vehicle, the method comprising operating at least one processor to:

retrieve telematics data associated with the vehicle, the telematics data originating from a telematics device installed in the vehicle;
process the telematics data to extract a plurality of feature datasets, the plurality of feature datasets comprising:

a first dataset associated with distances traveled by the vehicle;
a second dataset associated with stops completed by the vehicle; and
a third dataset associated with round trips performed by the vehicle;

apply a plurality of trained cluster models to the plurality of feature datasets to determine a plurality of vocation probabilities; and
determine the vocation of the vehicle based on the plurality of vocation probabilities.

9. The method of claim 8, wherein the plurality of trained cluster models are applied to the plurality of feature datasets in parallel.

10. The method of any one of claims 8 to 9, wherein determining the vocation of the vehicle is based on a predetermined priority of each vocation and a predetermined probability threshold.

11. The method of any one of claims 8 to 10, further comprising operating the at least one processor to:

determine a confidence score for each vocation probability based on that vocation probability and at least one incompatible vocation probability;
wherein determining the vocation of the vehicle is based on the plurality of vocation probabilities and the confidence score for each vocation probability.

12. The method of any one of claims 8 to 11, wherein the plurality of trained cluster model comprises:

a first trained cluster model operable to determine a probability of whether the vehicle is local, regional, or long-haul using the first data set;
a second trained cluster model operable to determine a probability of whether the vehicle is door-to-door using the second data set; and
a third trained cluster model operable to determine a probability of whether the vehicle is hub and spoke using the third data set.

13. The method of any one of claims 8 to 12, wherein at least one trained cluster model is a gaussian mixture model trained using an expectation-maximization algorithm.

14. The method of any one of claims 8 to 13, wherein determining the vocation of the vehicle comprises classifying the vehicle as one of: local, regional-haul, long-haul, door to door, and hub and spoke.

15. A non-transitory computer readable medium having instructions stored thereon executable by at least one processor to implement a method for determining a vocation of a vehicle, the method comprising operating the at least one processor to:

retrieve telematics data associated with the vehicle, the telematics data originating from a telematics device installed in the vehicle;
process the telematics data to extract a plurality of feature datasets, the plurality of feature datasets comprising:

a first dataset associated with distances traveled by the vehicle;
a second dataset associated with stops completed by the vehicle; and
a third dataset associated with round trips performed by the vehicle;

apply a plurality of trained cluster models to the plurality of feature datasets to determine a plurality of vocation probabilities; and
determine the vocation of the vehicle based on the plurality of vocation probabilities.

**FIG. 1**

**FIG. 2**

**FIG. 3**

**FIG. 4**

FIG. 5A

FIG. 5B

FIG. 6A

FIG. 6B

FIG. 7A

700B

**FIG. 7B**

800

802

RETRIEVE TELEMATICS DATA

804

EXTRACT FEATURE DATASETS

806

APPLY TRAINED MODELS TO FEATURE DATASETS

808

DETERMINE VEHICLE VOCATION

**FIG. 8**

Vocation
Probabilities

900

902
DOOR-TO-DOOR
> THRESHOLD?

YES

910
CONFIDENCE >
THRESHOLD?

YES

Door-to-
door

NO

NO

Not
Classified

904
HUB-AND-SPOKE
> THRESHOLD?

YES

912
CONFIDENCE >
THRESHOLD?

YES

Hub-and-
spoke

NO

NO

Not
Classified

906
MAX(LOCAL, REGIONAL,
LONG-HAUL)

Local

914
CONFIDENCE >
THRESHOLD?

YES

Local

NO

Not
Classified

Regional

916
CONFIDENCE >
THRESHOLD?

YES

Regional

NO

Not
Classified

Long-haul

918
CONFIDENCE >
THRESHOLD?

YES

Long-haul

NO

Not
Classified

FIG. 9

1000

1002

RETRIEVE TELEMATICS DATA

1004

EXTRACT FEATURE DATASETS

1006

TRAIN MODELS WITH FEATURE DATASETS

**FIG. 10**

Europäisches
Patentamt

European
Patent Office

Office européen
des brevets

# EUROPEAN SEARCH REPORT

Application Number

EP 23 20 3208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/142596 A1 (SIDDIQUE JAVED [CA] ET AL) 13 May 2021 (2021-05-13)<br>* paragraphs [0004] - [0028] *<br>* paragraphs [0041] - [0132] *<br>* paragraphs [0144] - [0173] *<br>* paragraphs [0175] - [0187] *<br>* tables 1-6 *<br>* figures 1-3, 10 * | 1-15 | INV.<br>G07C5/00<br>G06Q50/40<br>G08G1/00 |
| X | US 2020/143224 A1 (WAGLE JUSTIN JAMES [US] ET AL) 7 May 2020 (2020-05-07)<br>* paragraphs [0032] - [0061] *<br>* paragraphs [0107] - [0112] *<br>* figures 1-2 * | 1-15 | |
| X | Davis Jim: "Fleet safety analytics insights: context matters when analyzing driving behaviour",<br>,<br>3 October 2022 (2022-10-03), XP093138050,<br>Retrieved from the Internet:<br>URL:https://www.geotab.com/blog/fleet-safety-insights/<br>[retrieved on 2024-03-05]<br>* the whole document * | 1-15 | |
| X | Anonymous: "Data Science Package User Guide",<br>,<br>30 June 2020 (2020-06-30), XP093137903,<br>Retrieved from the Internet:<br>URL:https://support.geotab.com/mygeotab/mygeotab-add-ins/doc/data-science<br>[retrieved on 2024-03-05]<br>* the whole document * | 1-15 | |

TECHNICAL FIELDS
SEARCHED     (IPC)

G07C
G06Q

The present search report has been drawn up for all claims

| Place of search | Date of completion of the search | Examiner |
|---|---|---|
| Munich | 6 March 2024 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 3208

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | Publication date | Patent family member(s) | | Publication date |
|---|---|---|---|---|---|
| US 2021142596 | A1 | 13-05-2021 | US 10928277 B1 | | 23-02-2021 |
| | | | US 2021140775 A1 | | 13-05-2021 |
| | | | US 2021142595 A1 | | 13-05-2021 |
| | | | US 2021142596 A1 | | 13-05-2021 |
| US 2020143224 | A1 | 07-05-2020 | EP 3877727 A1 | | 15-09-2021 |
| | | | US 2020143224 A1 | | 07-05-2020 |
| | | | WO 2020096824 A1 | | 14-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63423136